(19) Europäisches Patentamt / European Patent Office / Office européen des brevets

(11) **EP 3 735 082 B1**

(12) **EUROPEAN PATENT SPECIFICATION**

(45) Date of publication and mention
of the grant of the patent:
**05.04.2023 Bulletin 2023/14**

(21) Application number: **18908068.2**

(22) Date of filing: **28.02.2018**

(51) International Patent Classification (IPC):
**H04W 72/12** *(2009.01)* **H04W 72/04** *(2009.01)*

(52) Cooperative Patent Classification (CPC):
**H04W 72/543; H04W 72/12;** H04W 72/0446

(86) International application number:
**PCT/CN2018/077605**

(87) International publication number:
**WO 2019/165607 (06.09.2019 Gazette 2019/36)**

(54) **DOWNLINK TRANSMISSION RESOURCE ALLOCATION METHOD AND DEVICE**

VERFAHREN UND VORRICHTUNG ZUR ZUWEISUNG VON
DOWNLINK-ÜBERTRAGUNGSRESSOURCEN

PROCÉDÉ ET DISPOSITIF D'ATTRIBUTION DE RESSOURCE DE TRANSMISSION DE LIAISON
DESCENDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.11.2020 Bulletin 2020/45**

(73) Proprietor: **HUAWEI TECHNOLOGIES CO., LTD.
Shenzhen, Guangdong 518129 (CN)**

(72) Inventors:
• **NING, Lei
Shenzhen, Guangdong 518129 (CN)**
• **HE, Lang
Shenzhen, Guangdong 518129 (CN)**
• **SUN, Wenjie
Shenzhen, Guangdong 518129 (CN)**
• **WANG, Aiying
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
EP-B1- 2 727 273          CN-A- 101 588 337
CN-A- 107 317 661         CN-A- 107 404 767
US-A1- 2013 194 931       US-A1- 2017 180 096

• ERICSSON: "RAN1 decisions for WI Shortened
TTI and processing time for LTE
(LTE_sTTIandPT) - per topic", 3GPP DRAFT;
R1-1721313, RAN1 DECISIONS FOR
LTE_STTIANDPT - PER TOPIC (REVISION OF
R1-1719247), 3RD GENERATION PARTNERSHIP
PROJECT (3GPP), MOBILE COMPETENCE
CENTRE ; 650, ROUTE DES LUCIOLES ; F-06921
S , vol. RAN WG1, no. Reno, USA; 20181127 -
20181201 4 December 2017 (2017-12-04),
XP051370717, Retrieved from the Internet:
URL:http://www.3gpp.org/ftp/tsg%5Fran/WG1%
5FRL1/TSGR1%5F91/Docs/ [retrieved on
2017-12-04]

## Description

## TECHNICAL FIELD

Embodiments of the present invention relate to a downlink transmission resource allocation method for a wireless communications system, base stations for a wireless communications system, a computer-readable storage medium, and a computer program product.

## BACKGROUND

With rapid development of communications technologies, application of the internet of things (internet of things, IoT) has become increasingly extensive. To ensure efficient communication between objects in an internet of things system, allocation of transmission resources in the internet of things system is critical.

Document US 2013/194931 AI discloses a method for providing enhanced physical downlink control channel (ePDCCH) in a multiple carrier communication system, the method comprising: receiving, at a wireless transmit and receive unit (WTRU), a configuration for monitoring an ePDCCH resource; configuring the WTRU to monitor the ePDCCH resource on a subframe based on the configuration; and monitoring, at the WTRU, the ePDCCH resource on the subframe.

Document US 2017/180096 A1 discloses a method for communication of a terminal in a communication system, the method comprising: receiving downlink control information (DCI) for scheduling a second cell; transmitting uplink data corresponding to the DCI on a first subframe of the second cell; and receiving feedback information for the uplink data on a second subframe identified based on a time division duplex (TDD) uplink/downlink (UL/DL) configuration of a first cell, if the first cell and the second cell are configured for the terminal, and the TDD UL/DL configuration of the first cell and a TDD UL/DL configuration of the second cell are different, and the DCI for scheduling the second cell is received on the first cell.

Document ERICSSON, "RAN1 decisions for WI Shortened TTI and processing time for LTE (LTE_sTTIandPT) - per topic", vol. RAN WG1, no. Reno, USA; 20181127 - 20181201, (20171204), 3GPP DRAFT; R1-1721313, RANI DECISIONS FOR LTE_STTIANDPT - PER TOPIC (REVISION OF R1-1719247), 3RD GENERATION PARTNERSHIP PROJECT (3GPP), MOBILE COMPETENCE CENTRE ; 650, ROUTE DES LUCIOLES ; F-06921 S, URL: http://www.3gpp.org/ftp/tsg%5Fran/WG1%5FRL1/TSGR 1%5F91/Docs/, (20171204), XP051370717 discloses a method for shortened TTI and processing time for LTE.

Currently, in the narrowband internet of things (narrow band Internet of things, NB-IoT), a base station may allocate transmission resources to each object (for example, a terminal) in the NB-IoT. In a process in which the base station allocates downlink transmission resources to the terminal in the NB-IoT system, an example in which the base station allocates the downlink transmission resources to one terminal is used. The allocating, by the base station, the downlink transmission resources to the terminal includes: allocating, by the base station to the terminal, a time domain resource 1 used by the terminal to receive scheduling information, a time domain resource 2 used by the terminal to switch from a state of receiving the scheduling information to a state of receiving downlink data, a time domain resource 3 used by the terminal to receive the downlink data, and a time domain resource 4 used by the terminal to switch from a state of receiving the downlink data to a state of waiting to receive next scheduling information, where a length of the time domain resource 1 is denoted as T1, a length of the time domain resource 2 is denoted as T2, a length of the time domain resource 3 is denoted as T3, and a length of the time domain resource 4 is denoted as T4. Specifically, the base station may determine T1 based on a related parameter specified in a protocol, then select a smallest value from a candidate set of T2 specified in the protocol as candidate T2, determine, based on a total amount of to-be-sent downlink data, a quantity of subframes required to transmit the downlink data, and determine T3 by using the determined quantity of subframes, a quantity of repetitions of one or more subframes, and duration of the one or more subframes specified in the protocol. Then, the base station determines whether a length (denoted as T5) of a next time domain resource that is adjacent to the time domain resource 2 and that can be used to transmit the downlink data is greater than or equal to T3. If T5 is less than T3, the base station increases the candidate T2 based on the candidate set of T2 to obtain new candidate T2 (that is, determines a new time domain resource 2) until a length of a next time domain resource that is adjacent to the new time domain resource 2 and that can be used to transmit the downlink data is greater than or equal to T3. The base station determines the new candidate T2 as target T2. Finally, the base station determines T4 as specified in the protocol. In this way, the downlink transmission resource allocation is completed.

However, in the foregoing method, after the base station determines the candidate T2, if the length of the next time domain resource that is adjacent to the new time domain resource 2 and that can be used to transmit the downlink data is less than T3, the base station increases the candidate T2 until a length of a next time domain resource that is adjacent to a corresponding time domain resource 2 and that can be used to transmit the downlink data is greater than or equal to T3. Consequently, the base station may determine relatively large T2, and there may be a plurality of idle resource points (referred to as resource fragments below) on the time domain resource 2 that are not allocated to transmit the downlink data, resulting in a relatively low downlink peak rate of a cell.

## SUMMARY

The invention is set out in the appended set of claims.

## BRIEF DESCRIPTION OF DRAWINGS

FIG. 1 is a schematic architectural diagram of a communications system according to an embodiment of the present invention;

FIG. 2 is a schematic hardware diagram of a base station according to an embodiment of the present invention;

FIG. 3 is a schematic diagram of a time domain resource according to an embodiment of the present invention;

FIG. 4 is a first schematic diagram of a downlink transmission resource allocation method according to an embodiment of the present invention;

FIG. 5 is a second schematic diagram of a downlink transmission resource allocation method according to an embodiment of the present invention;

FIG. 6A and FIG. 6B are third schematic diagrams of a downlink transmission resource allocation method according to an embodiment of the present invention;

FIG. 7A and FIG. 7B are fourth schematic diagrams of a downlink transmission resource allocation method according to an embodiment of the present invention;

FIG. 8 is a first schematic structural diagram of a base station according to an embodiment of the present invention; and

FIG. 9 is a second schematic structural diagram of a base station according to an embodiment of the present invention.

## DESCRIPTION OF EMBODIMENTS

The term "and/or" in this specification describes only an association relationship for describing associated objects and represents that three relationships may exist. For example, A and/or B may represent the following three cases: Only A exists, both A and B exist, and only B exists.

In the specification and claims in embodiments of the present invention, the terms "first", "second", and the like are intended to distinguish between different objects but do not indicate a particular order of the objects. For example, a first time domain resource, a second time domain resource, and the like are intended to distinguish different time domain resources but do not indicate a particular order of the time domain resources.

In the embodiments of the present invention, the word "example" or "for example" is used to represent giving an example, an illustration, or a description. Any embodiment or design scheme described as an "example" or "for example" in the embodiments of the present invention does not need to be explained as being more preferred or having more advantages than another embodiment or design scheme. Exactly, use of the word "example", "for example", or the like is intended to present a related concept in a specific manner.

In descriptions of the embodiments of the present invention, unless otherwise stated, "a plurality of" means two or more than two. For example, a plurality of processing units are two or more processing units. A plurality of systems are two or more systems.

Based on a problem described in the background, according to the downlink transmission resource allocation method provided in the embodiments of the present invention, a base station allocates downlink transmission resources to a terminal, so that the terminal can communicate with the base station on the downlink transmission resources allocated by the base station. This can reduce resource fragments of a downlink channel, thereby improving a downlink peak rate of a cell.

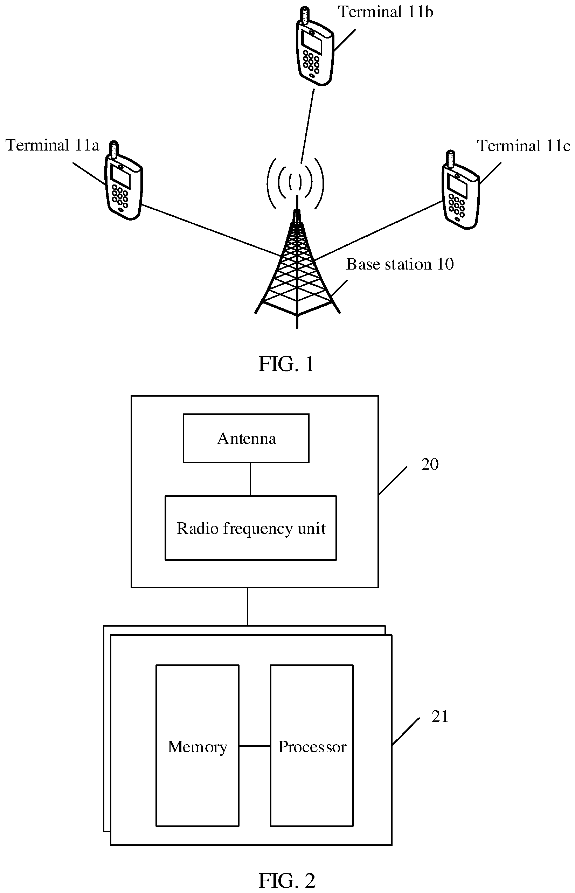

The downlink transmission resource allocation method and apparatus provided in the embodiments of the present invention may be applied to a wireless communications system. The wireless communications system may be an LTE system, an LTE-advanced (LTE-Advanced, LTE-A) system, or a new radio (new radio, NR) system (namely, a 5G system), or the like. For example, the wireless communications system provided in the embodiments of the present invention is the NR system. FIG. 1 is a schematic architectural diagram of an NR system according to an embodiment of the present invention. In FIG. 1, the NR system includes a base station 10 and at least one terminal (in FIG. 1, three terminals are used as an example, and are respectively denoted as a terminal 11a, a terminal 11b, and a terminal 11c). The base station 10 may communicate with the terminal 11a, the terminal 11b, or the terminal 11c by using a downlink channel or an uplink channel. The downlink transmission resource allocation method provided in the embodiments of the present invention is used to allocate downlink time domain resources to the terminal.

The base station provided in the embodiments of the present invention may be a commonly used base station, an evolved NodeB (evolved node base station, eNB), a network device (for example, a next-generation NodeB (next generation node base station, gNB), a new radio NodeB (new radio eNB), a macro base station, a micro base station, a high frequency base station, or a transmission and reception point (transmission and reception point, TRP)) in the NR system, or the like. For example, in the embodiments of the present invention, the commonly used base station is used as an example to describe a hardware structure of the network device. The following specifically describes components of the base station provided in the embodiments of the present invention with reference to FIG. 2. As shown in FIG. 2, the base station provided in the embodiments of the present invention may include a part 20 and a part 21. The part 20 is mainly configured to: send and receive a radio frequency signal, and perform conversion between the radio frequency signal and a baseband signal. The part 21 is mainly configured to: perform baseband processing, control the base station, and the like. The part 20 may usually be referred to as a transceiver unit, a transceiver machine, a transceiver circuit, a transceiver, or the like. The part 21 is usually a control center of the base station, or may usually be referred to as a processing unit, configured to control the base station to perform the steps performed by the base station in FIG. 2. For details, refer to the foregoing descriptions of the related parts.

The transceiver unit in the part 20 may also be referred to as a transceiver machine, a transceiver, or the like. The transceiver unit includes an antenna and a radio frequency unit. The radio frequency unit is mainly configured to perform radio frequency processing. Optionally, a component that is in the part 20 and that is configured to implement a reception function may be considered as a receiving unit, and a component that is configured to implement a transmission function may be considered as a sending unit. In other words, the part 20 includes the receiving unit and the sending unit. The receiving unit may also be referred to as a receiver, a receiver, a receiver circuit, or the like. The sending unit may be referred to as a transmitter, a transmitter, a transmitter circuit, or the like.

The part 21 may include one or more boards. Each board may include one or more processors and one or more memories. The processor is configured to read and execute a program in the memory, to implement a baseband processing function and control the base station. If there are a plurality of boards, the boards may be interconnected to enhance a processing capability. In an optional implementation, alternatively, the plurality of boards may share one or more processors, or the plurality of boards share one or more memories, or the plurality of boards simultaneously share one or more processors. The memory and the processor may be integrated together, or may be disposed independently. In some embodiments, the part 20 and the part 21 may be integrated together, or may be disposed independently. In addition, all functions of the part 21 may be integrated into one chip for implementation. Alternatively, some functions may be integrated into one chip for implementation and some other functions are integrated into one or more other chips for implementation. This is not limited in the embodiments of the present invention.

In the embodiments of the present invention, in a process in which the base station communicates with the terminal, the base station first sends scheduling information to the terminal, and then sends downlink data to the terminal. The terminal receives the scheduling information, switches from a state of receiving the scheduling information to a state of receiving the downlink data, and then start to receive the downlink data. Then, the terminal switches from the state of receiving the downlink data to the state of receiving the scheduling information, and waits to receive scheduling information sent by the base station next time. In the embodiments of the present invention, the base station may allocate, to the terminal, a transmission resource used to receive information (including receiving downlink scheduling information, the downlink data, and the like) on the downlink channel.

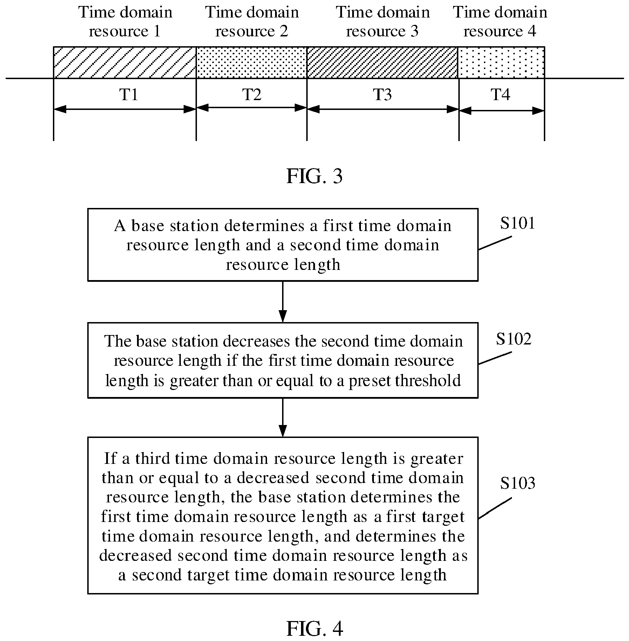

For example, as shown in FIG. 3, downlink transmission resources allocated by the base station to the terminal may include a time domain resource 1, a time domain resource 2, a time domain resource 3, and a time domain resource 4. A length of the time domain resource 1 allocated by the base station to the terminal is denoted as T1, where T1 may be understood as duration; a length of the time domain resource 2 is denoted as T2, a length of the time domain resource 3 is denoted as T3, and a length of the time domain resource 4 is denoted as T4. The time domain resource 1 of which the length is T1 is used by the terminal to receive the scheduling information sent by the base station, the time domain resource 2 of which the length is T2 is used by the terminal to switch from the state of receiving the scheduling information to the state of receiving the downlink data (that is, it may be understood that the time domain resource 2 is a resource that is reserved by the base station and that is used by the terminal to process the scheduling information), the time domain resource 3 of which the length is T3 is used to receive the downlink data sent by the base station, and the time domain resource 4 of which the length is T4 is used by the terminal to switch from the state of receiving the downlink data to a state of receiving scheduling information sent by the base station next time.

It needs to be noted that, in the embodiments of the present invention, the time domain resource 2 and the time domain resource 4 are latency that is determined by the base station and of which the terminal performs state switching, that is, waiting latency in which the terminal waits to receive the scheduling information or the downlink data, and the terminal does not use the time domain resource 2 and the time domain resource 4. The base station may allocate the time domain resource 2 and the time domain resource 4 to another terminal, so that the another terminal receives information or data.

In the embodiments of the present invention, in a process in which the terminal switches from the state of receiving the downlink data to the state of receiving the scheduling information sent by the base station next time, the terminal first switches from the state of receiving the downlink data to a state of sending uplink information (for example, sending an acknowledgment data packet of the downlink data), and then sends the uplink information to the base station. Then, the terminal switches from the state of sending the uplink information to the state of receiving the scheduling information sent by the base station next time, and waits to receive the scheduling information sent by the base station next time.

As shown in FIG. 4, a downlink transmission resource allocation method according to an embodiment of the present invention may include S101 to S103.

S101: A base station determines a first time domain resource length and a second time domain resource length.

In this embodiment of the present invention, a time domain resource length may be understood as duration. The first time domain resource length is a length of a first time domain resource, and the second time domain resource length is a length of a second time domain resource. Herein, the first time domain resource is equivalent to the time domain resource 2 shown in FIG. 3, and the second time domain resource is equivalent to the time domain resource 3 shown in FIG. 3. It may be learned that the first time domain resource is used by a terminal to switch from a first state to a second state, the first state is a state in which the terminal receives scheduling information, the second state is a state in which the terminal receives downlink data, and the second time domain resource is used by the terminal to receive the downlink data.

The determining, by the base station, the first time domain resource length in S101 may be understood as determining, by the base station, the first time domain resource length for the first time or determining, by the base station, an initial value of the first time domain resource length. In this embodiment of the present invention, an optional range of the first time domain resource length is specified in a protocol of communication between the base station and the terminal. For example, the first time domain resource length may be a sum of each element in a preset time domain resource length set and a preset length. If the preset time domain resource length set is denoted as $\{a_1, a_2, a_3, a_4, ..., a_n\}$, and the preset length is $\Delta$, a first time domain resource length candidate set is $\{\Delta+a_1, \Delta+a_2, \Delta+a_3, \Delta+a_4, ..., \Delta+a_n\}$.

For example, the first time domain resource length determined by the base station for the first time may be a smallest time domain resource length in the first time domain resource length candidate set. For example, if $\Delta = 4ms$, and the preset set is {0,4,8,12,16,32,64,128}, the first time domain resource length candidate set may be {4+0,4+4,4+8,4+12,4+16,4+32,4+64,4+128}, and the first time domain resource length determined by the base station may be 4 ms.

It needs to be noted that, in this embodiment of the present invention, the base station may determine, based on an actual situation, whether the first time domain resource length determined for the first time meets a use condition (where the use condition is described in detail in the following embodiment). If the first time domain resource length does not meet the use condition, the base station may update the first time domain resource length. A specific method may include: selecting, by the base station in ascending order, a next value from the first time domain resource length candidate set as the first time domain resource length until the first time domain resource length that meets the use condition is selected.

The determining, by the base station, the second time domain resource length in S101 may be understood as determining, by the base station, the second time domain resource length for the first time or determining, by the base station, an initial value of the second time domain resource length. In this embodiment of the present invention, the base station may determine, based on an amount of to-be-sent downlink data and a transport block size specified in a protocol, a quantity (referred to as a first subframe quantity below) of subframes used by the terminal to receive the downlink data, and then determines the second time domain resource length based on the first subframe quantity, duration of one or more subframes specified in the protocol, and a quantity of repetitions of the one or more subframes. For example, the second time domain resource length may be obtained by using the following formula:

$$T3 = M \times N \times P,$$

where
T3 is the second time domain resource length, M is the first subframe quantity, N is the duration of the one or more subframes, and P is the quantity of repetitions of the one or more subframes.

It needs to be noted that different bearer capabilities of the transport blocks may indicate different quantities (namely, first subframe quantities) of the subframes that are allocated by the base station to the terminal and that are used by the terminal to receive the downlink data. Specifically, the first subframe quantity may change within a range. For example, when a value range of the first subframe quantity is [1, 5], the first subframe quantity may be 1, 2, 3, 4, or 5. To enable the terminal to quickly receive the downlink data sent by the base station (that is, to improve a rate at which the terminal receives the downlink data), when determining the second time domain resource length for the first time, the base station determines a largest quantity of subframes as the first subframe quantity.

S 102: The base station decreases the second time domain resource length if the first time domain resource length is greater than or equal to a preset threshold.

S 103: If a third time domain resource length is greater than or equal to a decreased second time domain resource length, the base station determines the first time domain resource length as a first target time domain resource length, and determines the decreased second time domain resource length as a second target time domain resource length.

A third time domain resource is a next time domain resource that is adjacent to the first time domain resource and that can be used to transmit the downlink data.

In this embodiment of the present invention, if the first time domain resource length is greater than or equal to the preset threshold, the base station may first decrease the second time domain resource length, and then determine whether a length (namely, the third time domain resource length) of the next time domain resource that is adjacent to the first time domain resource and that can be used to transmit the downlink data is greater than or equal to the decreased second time domain resource length. If the third time domain resource length is greater than or equal to the decreased second time domain resource length, it indicates that when the base station allocates the second time domain resource length to the terminal, the third time domain resource adjacent to the first time domain resource can be used by the terminal to receive the downlink data (that is, the third time domain resource can meet a resource requirement of receiving the downlink data by the terminal). Therefore, the base station determines the first time domain resource length as the first target time domain resource length (namely, the length of the first time domain resource allocated by the base station to the terminal), and determines the decreased second time domain resource length as the second target time domain resource length (namely, the length of the second time domain resource allocated by the base station to the terminal).

It may be understood that, in S101, the use condition that the first time domain resource length needs to meet is: The length (namely, the third time domain resource length) of the next time domain resource that is adjacent to the first time domain resource and that can be used to transmit the downlink data is greater than or equal to the decreased second time domain resource length.

It needs to be noted that, in this embodiment of the present invention, the preset threshold of the first time domain resource length may be determined based on an actual situation (for example, may be 12 ms). This is not specifically limited in the embodiments of the present invention.

According to the downlink transmission resource allocation method provided in this embodiment of the present invention, the base station determines the first time domain resource length and the second time domain resource length, and then decreases the second time domain resource length if the first time domain resource length is greater than or equal to the preset threshold. In addition, if the length (namely, the third time domain resource length) of the next time domain resource that is adjacent to the first time domain resource and that can be used to transmit the downlink data is greater than or equal to the decreased second time domain resource length, the base station determines the first time domain resource length as the first target time domain resource length, and determines the decreased second time domain resource length as the second target time domain resource length. Compared with the prior art, in this embodiment, if the first time domain resource length is greater than or equal to the preset threshold, the base station may first decrease the second time domain resource length, and then determine whether the third time domain resource length is greater than or equal to the decreased second time domain resource length, so that the first time domain resource length can be decreased to some extent, that is, resource fragments of a downlink channel can be reduced, thereby increasing a downlink peak rate of a cell.

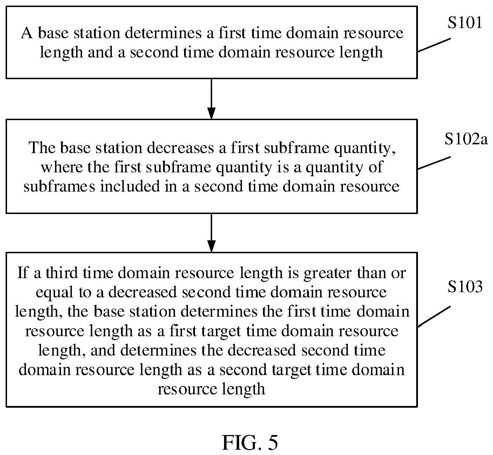

Optionally, with reference to FIG. 4, as shown in FIG. 5, S 102 may specifically be implemented by performing S 102a.

S 102a: The base station decreases the first subframe quantity, where the first subframe quantity is a quantity of subframes included in the second time domain resource.

In this embodiment of the present invention, a decreased first subframe quantity meets the following condition:

$$N2 \leq N1 \leq N3,$$

where
N1 is the decreased first subframe quantity, N2 is a smallest value of a quantity of subframes required by the terminal to receive the downlink data, and N3 is a largest value of the quantity of subframes required by the terminal to receive the downlink data. That is, the decreasing the first subframe quantity may be understood as decreasing the first subframe quantity within a value range of the first subframe quantity.

Optionally, in this embodiment of the present invention, when the first subframe quantity is decreased, the first subframe quantity may be decreased in a preset decreasing manner. For example, the base station may decrease the first subframe quantity one by one within the value range of the first subframe quantity. For example, the value range of the first subframe quantity is [1, 5], and a current first subframe quantity is 4. The decreasing, by the base station, the first subframe quantity this time is specifically decreasing, by the base station, the first subframe quantity by 1, and a decreased first subframe quantity is 3.

The first subframe quantity may alternatively be decreased in another manner, and may be specifically determined based on an actual use requirement. This is not limited in the embodiments of the present invention.

In this embodiment of the present invention, before determining the first time domain resource length, the base station may further determine a third target time domain resource length, where a third target time domain resource is used by the terminal to receive the scheduling information sent by the base station (the third target time domain resource herein is equivalent to the time domain resource 1 shown in FIG. 3). After determining the second target time domain resource length, the base station may further determine a fourth target time domain resource length, where a fourth target time domain resource is used by the terminal to switch from the second state to the first state (the fourth target time domain resource herein is equivalent to the time domain resource 4 shown in FIG. 3).

The following is a complete process in which the base station determines the third target time domain resource length, the first target time domain resource length, the second target time domain resource length, and the fourth target time domain resource length, to describe the downlink transmission resource allocation method provided in the embodiments of the present invention in detail.

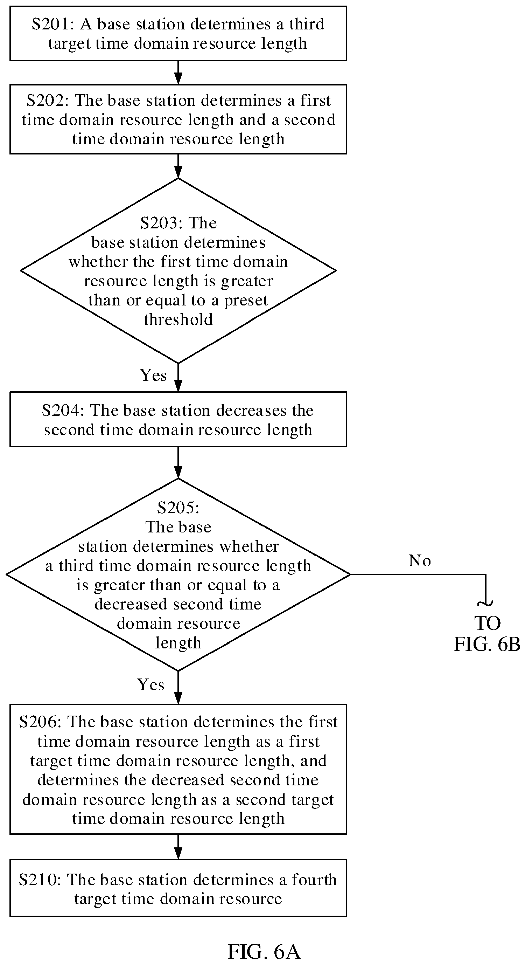

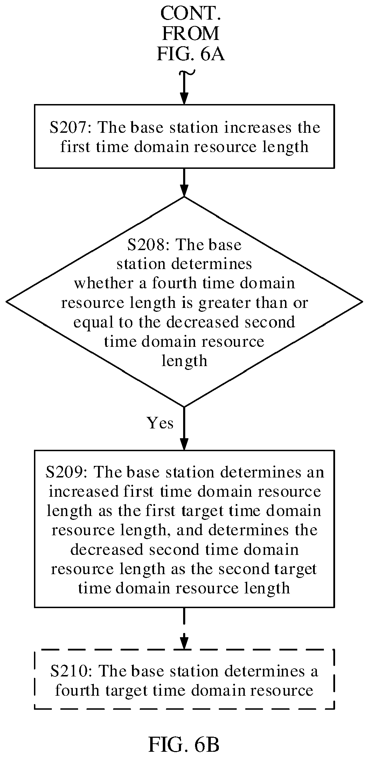

As shown in FIG. 6A and FIG. 6B, a downlink transmission resource allocation method according to an embodiment of the present invention may include the following steps.

S201: A base station determines a third target time domain resource length.

In this embodiment of the present invention, the base station may determine the third target time domain resource length as specified in a communication protocol. Specifically, the base station determines the third target time domain resource length based on a related parameter specified in a communication protocol, for example, a largest quantity of repetitions (namely, Rmax in the protocol), a current quantity of repetitions (namely, R in the protocol), and a period factor (namely, G in the protocol), and may determine a starting position of a third target time domain resource.

S202: The base station determines a first time domain resource length and a second time domain resource length.

For a specific description of S202, refer to the related description of S101 in the foregoing embodiment. Details are not described herein again.

S203: The base station determines whether the first time domain resource length is greater than or equal to a preset threshold.

For a description of the preset threshold, refer to the related description of the preset threshold in the foregoing embodiment. Details are not described herein again.

In this embodiment of the present invention, after determining the first time domain resource length, the base station may determine whether the first time domain resource length is greater than or equal to the preset threshold, so that the base station performs corresponding processing based on a determined result. Specifically, if the first time domain resource length is greater than or equal to the preset threshold, the base station performs S204.

S204: The base station decreases the second time domain resource length.

For a specific description of S204, refer to the related description of S102 (including S 102a) in the foregoing embodiment. Details are not described herein again.

S205: The base station determines whether a third time domain resource length is greater than or equal to a decreased second time domain resource length.

In this embodiment of the present invention, the determining, by the base station, whether a next available time domain resource (namely, the third time domain resource) adjacent to the first time domain resource can meet a resource requirement of receiving downlink data by a terminal may be specifically implemented by determining whether the third time domain resource length is greater than or equal to the decreased second time domain resource length. If the third time domain resource length is greater than or equal to the decreased second time domain resource length, it indicates that when the base station allocates the decreased second time domain resource length to the terminal, the third time domain resource adjacent to the first time domain resource can be used by the terminal to receive the downlink data (that is, the third time domain resource can meet the resource requirement of receiving the downlink data by the terminal); or if the third time domain resource length is less than the decreased second time domain resource length, it indicates that when the base station allocates the decreased second time domain resource length to the terminal, the third time domain resource adjacent to the first time domain resource cannot be used by the terminal to receive the downlink data (that is, the third time domain resource cannot meet the resource requirement of receiving the downlink data by the terminal).

In this embodiment of the present invention, if the third time domain resource length is greater than or equal to the decreased second time domain resource length, the base station performs S206.

S206: The base station determines the first time domain resource length as a first target time domain resource length, and determines the decreased second time domain resource length as a second target time domain resource length.

In this embodiment of the present invention, after the base station decreases the second time domain resource, a next time domain resource that is adjacent to the first time domain resource and that can be used to transmit the downlink data meets the resource requirement of receiving the downlink data by the terminal. Therefore, the base station may determine the determined first time domain resource length as the first target time domain resource length, and determine the decreased second time domain resource length as the second target time domain resource length, so that allocation of the first target time domain resource length and the second target time domain resource length is completed.

If the third time domain resource length is less than the decreased second time domain resource length, the base station performs S207.

S207: The base station increases the first time domain resource length.

In this embodiment of the present invention, if after the base station decreases the second time domain resource, the next time domain resource that is adjacent to the first time domain resource and that can be used to transmit the downlink data still cannot meet the resource requirement of receiving the downlink data by the terminal, the base station increases the first time domain resource length, and then determines whether a next time domain resource that is adjacent to an increased first time domain resource and that can be used to transmit the downlink data meets the resource requirement of receiving the downlink data by the terminal.

Optionally, in this embodiment of the present invention, the method for increasing the first time domain resource by the base station may include S207a.

S207a: The base station sequentially increases one or more first time domain resource lengths in ascending order based on a first time domain resource length candidate set.

The first time domain resource length candidate set includes at least one candidate first time domain resource length.

For a description of the first time domain resource length candidate set, refer to the related description of the first time domain resource length candidate set in S101. Details are not described herein again.

For example, the method for increasing the first time domain resource length by the base station may be as follows: If the first time domain resource length candidate set is {4 + 0,4 + 4,4 + 8,4 + 12,4 + 16,4 + 32,4 + 64,4 + 128}, a current first time domain resource length is 4, and the base station sequentially increases the first time domain resource lengths in the first time domain resource length candidate set in ascending order, a first time domain resource length increased this time is a next value of 4, that is, an increased first time domain resource length is 8.

It needs to be noted that, in this embodiment of the present invention, the base station may alternatively increase the first time domain resource length in another manner (for example, in an arithmetic sequence manner) based on the first time domain resource length candidate set. The manner may specifically be determined based on an actual use requirement. This is not limited in the embodiments of the present invention.

In an optional implementation, if the third time domain resource length is less than the decreased second time domain resource length, the base station may redetermine the third target time domain resource length (that is, the base station repeats step S201), adjust the third time domain resource length or a starting position of the third time domain resource, and then increase the first time domain resource length.

S208: The base station determines whether a fourth time domain resource length is greater than or equal to the decreased second time domain resource length.

A fourth time domain resource is the next time domain resource that is adjacent to the increased first time domain resource and that can be used to transmit the downlink data.

Similar to S205, in this embodiment of the present invention, after increasing the first time domain resource length, the base station determines whether a length (namely, the fourth time domain resource length) of the next time domain resource that is adjacent to the increased first time domain resource and that can be used to transmit the downlink data is greater than or equal to the decreased second time domain resource length, to determine whether the fourth time domain resource meets the resource requirement of receiving the downlink data by the terminal.

In this embodiment of the present invention, if the fourth time domain resource length is greater than or equal to the decreased second time domain resource length, the base station performs S209.

S209: The base station determines the increased first time domain resource length as the first target time domain resource length, and determines the decreased second time domain resource length as the second target time domain resource length.

Similar to S206, in S209, after the base station increases the first time domain resource length, the next time domain resource that is adjacent to the increased first time domain resource and that can be used to transmit the downlink data meets a requirement of receiving the downlink data by the terminal. Therefore, the base station determines the increased first time domain resource length as the first target time domain resource length, and determines the decreased second time domain resource length as the second target time domain resource length, so that allocation of the first target time domain resource length and the second target time domain resource length is completed.

In this embodiment of the present invention, if the fourth time domain resource length is less than the decreased second time domain resource length, the base station returns to S204, and repeats related steps. A difference from S204 (the base station decreases the second time domain resource length) is that the base station continues to decrease the decreased second time domain resource length.

In this embodiment of the present invention, after the base station increases the first time domain resource length, if the next time domain resource (namely, the fourth time domain resource) that is adjacent to the increased first time domain resource and that can be used to transmit the downlink data still cannot meet the resource requirement of receiving the downlink data by the terminal, the base station continues to decrease, based on a second time domain resource after a previous decrease, the second time domain resource length (a second time domain resource length after the second decrease may be referred to as a second time domain resource length after two decreases below), and then determines whether the fourth time domain resource length is greater than or equal to the second time domain resource length after two decreases. In this way, a decrease of the second time domain resource length and an increase of the first time domain resource length are performed in an alternate iteration manner until a length of a next time domain resource that is adjacent to a current first time domain resource (which may be understood as a current first time domain resource of which a length is increased for a plurality of times) and that can be used to transmit the downlink data is greater than or equal to a current second time domain resource length (which may be understood as a current second time domain resource length after a plurality of decreases). The base station determines the current first time domain resource length as the first target time domain resource length, and determines the current second time domain resource length as the second target time domain resource length.

In this embodiment of the present invention, in S203, if the base station determines that the first time domain resource length is less than the preset threshold, the base station further determines whether the third time domain resource length is greater than or equal to the second time domain resource length. If the third time domain resource length is greater than or equal to the second time domain resource length, it indicates that the third time domain resource meets the resource requirement of receiving the downlink data by the terminal. The base station determines the first time domain resource length as the first target time domain resource length, and determines the second time domain resource length as the second target time domain resource length, so that allocation of the first time domain resource length and the second time domain resource length is completed.

If the third time domain resource length is less than the second time domain resource length, the base station increases the first time domain resource length, and repeatedly performs a step similar to S208. In this way, a decrease of the second time domain resource length and an increase of the first time domain resource length are performed in an alternate iteration manner until a length of a next time domain resource that is adjacent to a current first time domain resource (which may be understood as a current first time domain resource of which a length is increased for a plurality of times) and that can be used to transmit the downlink data is greater than or equal to a current second time domain resource length (which may be understood as a current second time domain resource length after a plurality of decreases). The base station determines the current first time domain resource length as the first target time domain resource length, and determines the current second time domain resource length as the second target time domain resource length.

It may be learned that, in S203, if the base station determines that the first time domain resource length is less than the preset threshold, related steps performed by the base station are similar to S205 and related steps performed after S205. A difference from S205 (the base station determines whether the third time domain resource length is greater than or equal to the decreased second time domain resource length) is that the base station determines whether the third time domain resource length is greater than or equal to the second time domain resource length if determining that the first time domain resource length is less than the preset threshold.

In this embodiment of the present invention, after the base station determines a first target time domain resource and a second target time domain resource, the base station performs S210.

S210: The base station determines a fourth target time domain resource.

In this embodiment of the present invention, the base station may determine, as specified in the communication protocol, the fourth target time domain resource used by the terminal to switch from a second state to a first state.

It needs to be noted that, in this embodiment of the present invention, after determining the first target time domain resource and the second target time domain resource, the base station performs S210, that is, S210 can be performed after S206 or S209.

After allocating the third target time domain resource, the first target time domain resource, the second target time domain resource, and the fourth target time domain resource to the terminal, the base station completes allocating downlink transmission resources to the terminal. The base station first sends scheduling information to the terminal, where the scheduling information includes downlink transmission resource configuration information (the downlink transmission resource configuration information indicates the downlink transmission resources allocated by the base station to the terminal), and then sends the downlink data to the terminal, so that the terminal receives, based on the downlink transmission resources allocated by the base station to the terminal, the scheduling information and the downlink data that are sent by the base station.

In this embodiment of the present invention, the base station may allocate downlink transmission resources to all terminals in a cell by using the foregoing downlink transmission resource allocation method. When the first time domain resource length is greater than the preset threshold, the base station first appropriately decreases the second time domain resource length (which may be understood as reversely adjusting (decreasing) the second time domain resource length in a preferred manner). When the length of the next time domain resource adjacent to the first time domain resource is greater than or equal to the decreased second time domain resource length, the base station determines the first time domain resource length as the first target time domain resource length, and determines the decreased second time domain resource length as the second target time domain resource length. When the length of the next time domain resource adjacent to the first time domain resource is less than the decreased second time domain resource length, the base station increases the first time domain resource length. Compared with the prior art, in this embodiment, the base station determines the first target time domain resource and the second target time domain resource by performing a decrease of the second time domain resource and an increase of the first time domain resource in an alternate iteration manner, so that the first time domain resource length can be decreased to some extent (that is, the first time domain resource length is not always increased when the length of the next time domain resource adjacent to the first time domain resource is less than the second time domain resource length), thereby reducing resource fragments of a downlink channel. In this way, a downlink peak rate of an entire cell can be increased, so that resource utilization of the downlink channel can be improved, and average data transmission duration of the terminal in the cell can be decreased, to reduce power consumption of the terminal.

In the foregoing embodiment, the base station determines, based on different determining conditions, whether to increase the first time domain resource length or whether to decrease the second time domain resource length. It may be understood that, the first time domain resource length (for example, the unchanged first time domain resource length or the increased first time domain resource length in the foregoing embodiment) determined after the base station determines whether to increase the first time domain resource length may be referred to as the current first time domain resource length; a length (for example, the third time domain resource length or the fourth time domain resource length in the foregoing embodiment) of the next time domain resource that is adjacent to the current first time domain resource and that can be used to transmit the downlink data may be referred to as the current third time domain resource length; and the second time domain resource length (the second time domain resource length or the decreased second time domain resource length) determined after the base station determines whether to decrease the second time domain resource length may be referred to as the current second time domain resource length.

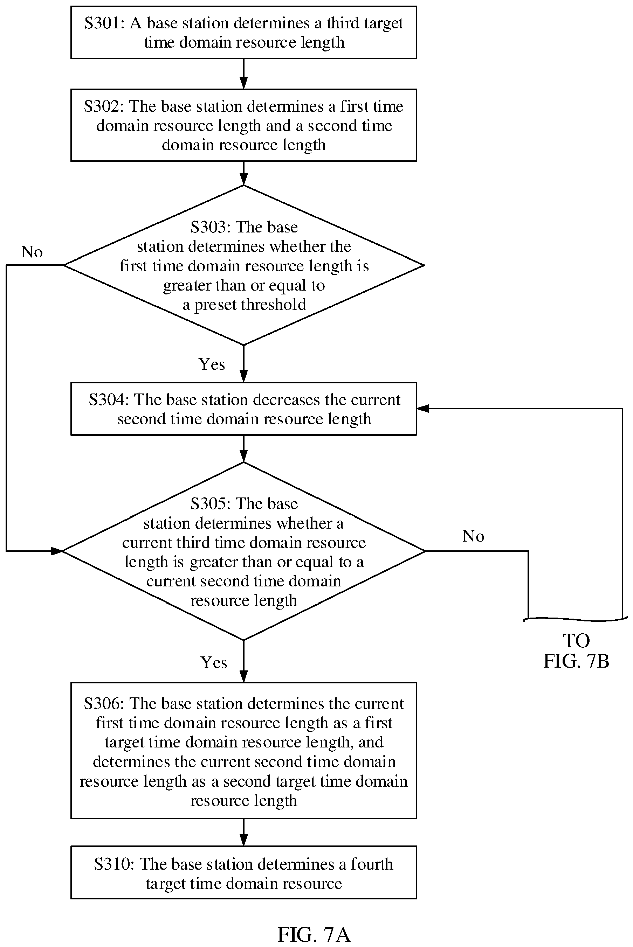

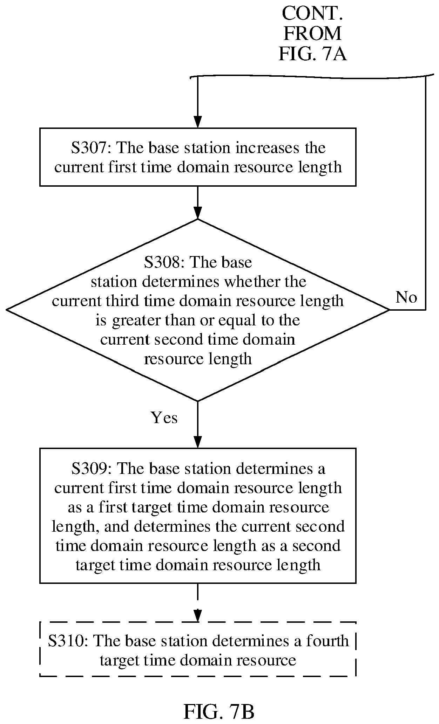

Based on the above, as shown in FIG. 7A and FIG. 7B, a downlink transmission resource allocation method according to an embodiment of the present invention may include the following steps.

S301: A base station determines a third target time domain resource length.

S302: The base station determines a first time domain resource length and a second time domain resource length.

S303: The base station determines whether the first time domain resource length is greater than or equal to a preset threshold.

In this embodiment of the present invention, if the first time domain resource length is greater than or equal to the preset threshold, the base station performs S304.

S304: The base station decreases the current second time domain resource length.

S305: The base station determines whether a current third time domain resource length is greater than or equal to a current second time domain resource length.

In this embodiment of the present invention, the current second time domain resource length in S305 is a second time domain resource length obtained by decreasing the current second time domain resource length in S304. If the current third time domain resource length is greater than or equal to the current second time domain resource length, the base station performs S306.

S306: The base station determines the current first time domain resource length as a first target time domain resource length, and determines the current second time domain resource length as a second target time domain resource length.

If the current third time domain resource length is less than the current second time domain resource length, the base station performs S307.

S307: The base station increases the current first time domain resource length.

S308: The base station determines whether the current third time domain resource length is greater than or equal to the current second time domain resource length.

In this embodiment of the present invention, if the current third time domain resource length is greater than or equal to the current second time domain resource length, the base station performs S309.

S309: The base station determines a current first time domain resource length as the first target time domain resource length, and determines the current second time domain resource length as the second target time domain resource length.

In this embodiment of the present invention, if the current third time domain resource length is less than the current second time domain resource length, the base station returns to S304.

In this embodiment of the present invention, in S303, if the base station determines that the first time domain resource length is less than the preset threshold, the base station performs S305.

After the base station determines a first target time domain resource and a second target time domain resource, the base station performs S310.

S310: The base station determines a fourth target time domain resource.

It needs to be noted that, in this embodiment of the present invention, after determining the first target time domain resource and the second target time domain resource, the base station performs S310, that is, S310 can be performed after S306 or S309.

For specific descriptions of S301 to S310, refer to the related description of S201 to S210 in the foregoing embodiment. Details are not described herein again.

The solutions provided in the embodiments of the present invention are described above mainly from a perspective of a network element. It may be understood that, to implement the foregoing functions, the network element such as the base station in the embodiments of the present invention includes corresponding hardware structures and/or software modules for performing the functions. A person skilled in the art needs to easily be aware that, in combination with units and algorithm steps in the examples described in the embodiments disclosed in this specification, the embodiments of the present invention may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it does not need to be considered that the implementation goes beyond the scope of this application.

In the embodiments of the present invention, functional modules of the base station may be obtained through division according to the foregoing method examples. For example, the functional modules may be obtained through division corresponding to various functions, or two or more functions may be integrated into one processing module. The integrated module may be implemented in a form of hardware, or may be implemented in a form of a software functional module. It needs to be noted that, in the embodiments of the present invention, module division is an example, and is merely logical function division. During actual implementation, another division manner may be used.

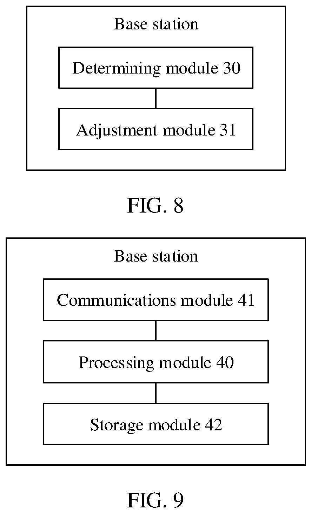

When the functional modules are obtained through division corresponding to the functions, FIG. 8 is a possible schematic structural diagram of a base station in the foregoing embodiment. As shown in FIG. 8, the base station may include a determining module 30 and an adjustment module 31. The determining module 30 may be configured to support the base station in performing S101, S103, S201 to S203, S205, S206, S208 to S210, S301 to S303, S305, S306, and S308 to S310 in the foregoing method embodiments. The adjustment module 31 may be configured to support the base station in performing S 102 (including S 102a), S204, S207 (including S207a), S304, and S307 in the foregoing method embodiments. All related content of the steps in the foregoing method embodiments may be cited in function descriptions of corresponding functional modules. Details are not described herein again.

When an integrated unit is used, FIG. 9 is a possible schematic structural diagram of a base station in the foregoing embodiment. As shown in FIG. 9, the base station may include a processing module 40 and a communications module 41. The processing module 40 may be configured to control and manage an operation of the base station. For example, the processing module 40 may be configured to support the base station in performing S101 to S103, S201 to S210, and S301 to S310 in the foregoing method embodiments, and/or another process of the technology described in this specification. The communications module 41 may be configured to support communication between the base station and another network entity. Optionally, as shown in FIG. 9, the base station may further include a storage module 42, configured to store program code and data of the base station.

The processing module 40 may be a processor or a controller (for example, may be the processor shown in FIG. 2). For example, the processing module 40 may be a central processing unit (central processing unit, CPU), a general processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The processing module 40 may implement or execute various example logical blocks, modules, and circuits described with reference to content disclosed in the embodiments of the present invention. The processor may alternatively be a combination of processors implementing a computing function, for example, a combination of one or more microprocessors, or a combination of a DSP and a microprocessor. The communications module 41 may be a transceiver, a transceiver circuit, a communications interface, or the like (for example, may be the radio frequency unit shown in FIG. 2). The storage module 42 may be a memory.

When the processing module 40 is a processor, the communications module 41 is a transceiver, and the storage module 42 is a memory, the processor, the transceiver, and the memory may be connected by using a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer instructions are loaded and executed on a computer, all or some of the procedures or functions according to the embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid-state drive (solid state drives, SSD)), or the like.

According to the foregoing descriptions of the implementations, a person skilled in the art may clearly understand that, for the purpose of convenient and brief description, only division into the foregoing functional modules is used as an example for description. During an actual application, the foregoing functions may be allocated to different functional modules and implemented based on a requirement. In other words, an inner structure of an apparatus is divided into different functional modules, to implement all or some of the functions described above. For a detailed working process of the foregoing system, apparatus, and unit, refer to a corresponding process in the foregoing method embodiments. Details are not described herein again.

In the several embodiments provided in this application, it needs to be understood that the disclosed system, apparatus, and method may be implemented in other manners. For example, the foregoing apparatus embodiments are merely an example. For example, the module or unit division is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, that is, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor to perform all or some of the steps of the method according to the embodiments of this application. The foregoing storage medium includes: any medium that can store program code, such as a flash memory, a removable hard disk, a read-only memory, a random access memory, a magnetic disk, or an optical disc.

**Claims**

1. A downlink transmission resource allocation method for a wireless communications system, wherein the wireless communications system is an LTE system, an LTE-advanced system, or a new radio system, the method comprising:

   determining (S101), by a base station (10), a first time domain resource length, which is a length of a first time domain resource, and a second time domain resource length, which is a length of a second time domain resource, wherein the first time domain resource is used by a terminal (11) to switch from a first state to a second state, the first state is a state in which the terminal (11) receives scheduling information, the second state is a state in which the terminal (11) receives downlink data, and the second time domain resource is used by the terminal (11) to receive the downlink data;
   decreasing (S102), by the base station (10), the second time domain resource length if the first time domain resource length is greater than or equal to a preset threshold; and
   if a third time domain resource length of a third time domain resource is greater than or equal to the decreased second time domain resource length, determining (S103), by the base station (10), the first time domain resource length as a first target time domain resource length, and determining, by the base station (10), the decreased second time domain resource length as a second target time domain resource length, wherein the third time domain resource is a next time domain resource that is adjacent to the first time domain resource and that can be used to transmit the downlink data, wherein the second time domain resource and the third time domain resource are different time domain resources, wherein the first target time domain resource length is the length of the first time domain resource allocated by the base station (10) to the terminal (11), and wherein the second target time domain resource length is the length of the decreased second time domain resource allocated by the base station (10) to the terminal (11);

wherein the determining (S101), by the base station (10), the first time domain resource length comprises:

determining, by the base station (10), a smallest time domain resource length in a first time domain resource length candidate set, wherein each of the elements in the first time domain resource length candidate set is a sum of each element in a preset time domain resource length set and a preset length; and

wherein the determining (S101), by the base station (10), the second time domain resource length comprises:

obtaining the second time domain resource length by using the following formula:

$$T3 = M \times N \times P,$$

where T3 is the second time domain resource length, M is a quantity of subframes used by the terminal (11) to receive the downlink data, N is the duration of one or more subframes specified in a protocol, and P is the quantity of repetitions of the one or more subframes.

2. The method according to claim 1, wherein the decreasing (S102), by the base station (10), the second time domain resource length if the first time domain resource length is greater than or equal to a preset threshold comprises:
decreasing, by the base station (10), a first subframe quantity, wherein a decreased first subframe quantity meets: $N2 \leq N1 \leq N3$, N1 is the decreased first subframe quantity, N2 is a smallest value of a quantity of subframes required by the terminal (11) to receive the downlink data, N3 is a largest value of the quantity of subframes required by the terminal (11) to receive the downlink data, and the first subframe quantity is a quantity of subframes comprised in the current second time domain resource.

3. The method according to claim 1 or 2, wherein if the third time domain resource length is less than the decreased second time domain resource length, the method further comprises:

increasing, by the base station (10), the first time domain resource length; and
if a fourth time domain resource length of a fourth time domain resource is greater than or equal to the decreased second time domain resource length, determining, by the base station (10), an increased first time domain resource length as the first target time domain resource length, and determining, by the base station (10), the decreased second time domain resource length as the second target time domain resource length, wherein the fourth time domain resource is a next time domain resource that is adjacent to an increased first time domain resource and that is used to transmit the downlink data; or
decreasing, by the base station (10), the decreased second time domain resource length if the fourth time domain resource length is less than the decreased second time domain resource length.

4. The method according to any one of claims 1 to 3, wherein if the first time domain resource length is less than the preset threshold, the method further comprises:

determining, by the base station (10), whether the third time domain resource length is greater than or equal to the second time domain resource length; and if the third time domain resource length is greater than or equal to the second time domain resource length, determining, by the base station (10), the first time domain resource length as the first target time domain resource length, and determining, by the base station (10), the second time domain resource length as the second target time domain resource length; or
increasing, by the base station (10), the first time domain resource length if the third time domain resource length is less than the second time domain resource length.

5. The method according to claim 3 or 4, wherein the increasing, by the base station (10), the first time domain resource length comprises:
sequentially increasing, by the base station (10), one or more first time domain resource lengths in ascending order based on a first time domain resource length candidate set, wherein the first time domain resource length candidate set comprises at least one candidate first time domain resource length.

6. A base station (10) for a wireless communications system, wherein the wireless communications system is an LTE system, an LTE-advanced system, or a new radio system, the base station comprising a determining module (30) and an adjustment module (31), wherein

the determining module (30) is configured to determine a first time domain resource length, which is a length of a first time domain resource, and a second time domain resource length, which is a length of a second time domain resource, wherein the first time domain resource is used by a terminal (11) to switch from a first state to a second state, the first state is a state in which the terminal (11) receives scheduling information, the second state is a state in which the terminal (11) receives downlink data, and the second time domain resource is used by the terminal (11) to receive the downlink data;

the adjustment module (31) is configured to decrease the second time domain resource length if the first time domain resource length determined by the determining module (30) is greater than or equal to a preset threshold; and

the determining module (30) is further configured to: if a third time domain resource length of a third time domain resource is greater than or equal to the decreased second time domain resource length, determine the first time domain resource length as a first target time domain resource length, and determine the decreased second time domain resource length as a second target time domain resource length, wherein the third time domain resource is a next time domain resource that is adjacent to the first time domain resource and that can be used to transmit the downlink data, wherein the second time domain resource and the third time domain resource are different time domain resources, wherein the first target time domain resource length is the length of the first time domain resource allocated by the base station (10) to the terminal (11), and wherein the second target time domain resource length is the length of the decreased second time domain resource allocated by the base station (10) to the terminal (11);

wherein the determining module (30) is configured to determine the first time domain resource length by:

determining a smallest time domain resource length in a first time domain resource length candidate set, wherein each of the elements in the first time domain resource length candidate set is a sum of each element in a preset time domain resource length set and a preset length; and

wherein the determining module (30) is configured to determine the second time domain resource length by:
obtaining the second time domain resource length by using the following formula:

$$T3 = M \times N \times P,$$

where T3 is the second time domain resource length, M is a quantity of subframes used by the terminal (11) to receive the downlink data, N is the duration of one or more subframes specified in a protocol, and P is the quantity of repetitions of the one or more subframes.

7. The base station (10) according to claim 6, wherein the adjustment module (31) is specifically configured to decrease a first subframe quantity, wherein a decreased first subframe quantity meets: $N2 \leq N1 \leq N3$, N1 is the decreased first subframe quantity, N2 is a smallest value of a quantity of subframes required by the terminal (11) to receive the downlink data, N3 is a largest value of the quantity of subframes required by the terminal (11) to receive the downlink data, and the first subframe quantity is a quantity of subframes comprised in the third time domain resource.

8. The base station (10) according to claim 6 or 7, wherein

the adjustment module (31) is further configured to increase the first time domain resource length if the third time domain resource length is less than the decreased second time domain resource length; and

the determining module (30) is further configured to: if a fourth time domain resource length of a fourth time domain resource is greater than or equal to the decreased second time domain resource length, determine an increased first time domain resource length as the first target time domain resource length, and determine the decreased second time domain resource length as the second target time domain resource length, wherein the fourth time domain resource is a next time domain resource that is adjacent to an increased first time domain resource and that is used to transmit the downlink data; or

the adjustment module (31) is further configured to decrease the decreased second time domain resource length if the fourth time domain resource length is less than the decreased second time domain resource length.

9. The base station (10) according to any one of claims 6 to 8, wherein

the determining module (30) is further configured to determine whether the third time domain resource length is greater than or equal to the second time domain resource length; and

the determining module (30) is further configured to: if the third time domain resource length is greater than or equal to the second time domain resource length, determine the first time domain resource length as the first target time domain resource length, and determine the second time domain resource length as the second target time domain resource length; or the adjustment module (31) is further configured to increase the first time domain resource length if the third time domain resource length is less than the second time domain resource length.

10. The base station (10) according to claim 8 or 9, wherein the adjustment module (31) is specifically configured to sequentially increase one or more first time domain resource lengths in ascending order based on a first time domain resource length candidate set, wherein the first time domain resource length candidate set comprises at least one candidate first time domain resource length.

11. A base station (10) for a wireless communications system, wherein the wireless communications system is an LTE system, an LTE-advanced system, or a new radio system, the base station (10) comprising a processor (40) and a memory (42) coupled to the processor (40), wherein

the memory (42) is configured to store a computer instruction, and when the base station (10) runs, the processor (40) executes the computer instruction stored in the memory (42), so that the base station (10) performs the downlink transmission resource allocation method according to any one of claims 1 to 5.

12. A computer-readable storage medium, comprising a computer instruction, wherein when the computer instruction runs on a base station (10), the base station (10) performs the downlink transmission resource allocation method according to any one of claims 1 to 5.

13. A computer program product comprising a computer instruction, wherein when the computer program product runs on a base station (10), the base station (10) performs the downlink transmission resource allocation method according to any one of claims 1 to 5.

**Patentansprüche**

1. Verfahren zur Zuweisung von Downlink-Übertragungsressourcen für ein drahtloses Kommunikationssystem, wobei das drahtlose Kommunikationssystem ein LTE-System, ein LTE-Advanced-System oder ein neues Funksystem ist, wobei das Verfahren Folgendes umfasst:

Bestimmen (S101), durch eine Basisstation (10), einer ersten Zeitdomänen-Ressourcenlänge, die eine Länge einer ersten Zeitdomänen-Ressource ist, und einer zweiten Zeitdomänen-Ressourcenlänge, die eine Länge einer zweiten Zeitdomänen-Ressource ist,

wobei die erste Zeitdomänen-Ressource durch ein Endgerät (11) verwendet wird, um von einem ersten Zustand in einen zweiten Zustand umzuschalten, wobei der erste Zustand ein Zustand ist, in dem das Endgerät (11) Planungsinformationen empfängt, der zweite Zustand ein Zustand ist, in dem das Endgerät (11) Downlink-Daten empfängt, und die zweite Zeitdomänen-Ressource durch das Endgerät (11) verwendet wird, um die Downlink-Daten zu empfangen;

Verringern (S102), durch die Basisstation (10), der zweiten Zeitdomänen-Ressourcenlänge, wenn die erste Zeitdomänen-Ressourcenlänge größer oder gleich einem voreingestellten Schwellenwert ist; und

wenn eine dritte Zeitdomänen-Ressourcenlänge einer dritten Zeitdomänen-Ressource größer oder gleich der verringerten zweiten Zeitdomänen-Ressourcenlänge ist,

Bestimmen (S103), durch die Basisstation (10), der ersten Zeitdomänen-Ressourcenlänge als eine erste Ziel-Zeitdomänen-Ressourcenlänge und Bestimmen, durch die Basisstation (10), der verringerten zweiten Zeitdomänen-Ressourcenlänge als eine zweite Ziel-Zeitdomänen-Ressourcenlänge, wobei die dritte Zeitdomänen-Ressource eine nächste Zeitdomänen-Ressource ist, die an die erste Zeitdomänen-Ressource angrenzt und die verwendet werden kann, um die Downlink-Daten zu übertragen, wobei

die zweite Zeitdomänen-Ressource und die dritte Zeitdomänen-Ressource unterschiedliche Zeitdomänen-Ressourcen sind,

wobei die erste Ziel-Zeitdomänen-Ressourcenlänge die Länge der ersten Zeitdomänen-Ressource ist, die durch die Basisstation (10) dem Endgerät (11) zugewiesen wird, und wobei die zweite Ziel-Zeitdomänen-Ressourcenlänge die Länge der verringerten zweiten Zeitdomänen-Ressource ist, die durch die Basisstation (10) dem Endgerät (11) zugewiesen wird;

wobei das Bestimmen (S101), durch die Basisstation (10), der ersten Zeitdomänen-Ressourcenlänge Folgendes umfasst:

Bestimmen, durch die Basisstation (10), einer kleinsten Zeitdomänen-Ressourcenlänge in einem ersten Zeitdomänen-Ressourcenlängen-Kandidatensatz, wobei jedes der Elemente in dem ersten Zeitdomänen-Ressourcenlängen-Kandidatensatz eine Summe jedes Elements in einem voreingestellten Zeitdomänen-Ressourcenlängensatz und einer voreingestellten Länge ist; und

wobei das Bestimmen (S101), durch die Basisstation (10), der zweiten Zeitdomänen-Ressourcenlänge Folgendes umfasst:

Erhalten der zweiten Zeitdomänen-Ressourcenlänge mithilfe der folgenden Formel:

$$T3 = M \times N \times P,$$

wobei T3 die zweite Zeitdomänen-Ressourcenlänge ist, M eine Menge von Subframes ist, die durch das Endgerät (11) verwendet werden, um die Downlink-Daten zu empfangen, N die Dauer eines oder mehrerer Subframes ist, die in einem Protokoll spezifiziert sind, und P die Menge von Wiederholungen des einen oder der mehreren Subframes ist.

2. Verfahren nach Anspruch 1, wobei das Verringern (S102), durch die Basisstation (10), der zweiten Zeitdomänen-Ressourcenlänge, wenn die erste Zeitdomänen-Ressourcenlänge größer oder gleich einem voreingestellten Schwellenwert ist, Folgendes umfasst:

Verringern, durch die Basisstation (10), einer ersten Subframe-Menge, wobei eine verringerte erste Subframe-Menge Folgendes erfüllt: $N2 \leq N1 \leq N3$, wobei N1 die verringerte erste Subframe-Menge ist, N2 ein kleinster Wert einer Menge von Subframes ist, die von dem Endgerät (11) benötigt wird, um die Downlink-Daten zu empfangen, N3 ein größter Wert der Menge von Subframes ist, die von dem Endgerät (11) benötigt wird, um die Downlink-Daten zu empfangen, und die erste Subframe-Menge eine Menge von Subframes ist, die in der aktuellen zweiten Zeitdomänen-Ressource umfasst ist.

3. Verfahren nach Anspruch 1 oder 2, wobei, wenn die dritte Zeitdomänen-Ressourcenlänge kleiner als die verringerte zweite Zeitdomänen-Ressourcenlänge ist, das Verfahren ferner Folgendes umfasst:

Vergrößern, durch die Basisstation (10), der ersten Zeitdomänen-Ressourcenlänge; und

wenn eine vierte Zeitdomänen-Ressourcenlänge einer vierten Zeitdomänen-Ressource größer oder gleich der verringerten zweiten Zeitdomänen-Ressourcenlänge ist,

Bestimmen, durch die Basisstation (10), einer vergrößerten ersten Zeitdomänen-Ressourcenlänge als die erste Ziel-Zeitdomänen-Ressourcenlänge, und Bestimmen, durch die Basisstation (10), der verringerten zweiten Zeitdomänen-Ressourcenlänge als die zweite Ziel-Zeitdomäne Ressourcenlänge, wobei die vierte Zeitdomänen-Ressource eine nächste Zeitdomänen-Ressource ist, die an eine vergrößerte erste Zeitdomänen-Ressource angrenzt und die verwendet wird, um die Downlink-Daten zu übertragen; oder

Verringern, durch die Basisstation (10), der verringerten zweiten Zeitdomänen-Ressourcenlänge, wenn die vierte Zeitdomänen-Ressourcenlänge kleiner als die verringerte zweite Zeitdomänen-Ressourcenlänge ist.

4. Verfahren nach einem der Ansprüche 1 bis 3, wobei, wenn die erste Zeitdomänen-Ressourcenlänge kleiner als der voreingestellte Schwellenwert ist, das Verfahren ferner Folgendes umfasst:

Bestimmen, durch die Basisstation (10), ob die dritte Zeitdomänen-Ressourcenlänge größer oder gleich der zweiten Zeitdomänen-Ressourcenlänge ist; und

wenn die dritte Zeitdomänen-Ressourcenlänge größer oder gleich der zweiten Zeitdomänen-Ressourcenlänge ist,

Bestimmen, durch die Basisstation (10), der ersten Zeitdomänen-Ressourcenlänge als die erste Ziel-Zeitdomänen-Ressourcenlänge, und Bestimmen, durch die Basisstation (10), der zweiten Zeitdomänen-Ressourcenlänge als die zweite Ziel-Zeitdomäne Ressourcenlänge; oder

Vergrößern, durch die Basisstation (10), der ersten Zeitdomänen-Ressourcenlänge, wenn die dritte Zeitdomänen-Ressourcenlänge kleiner als die zweite Zeitdomänen-Ressourcenlänge ist.

5. Verfahren nach Anspruch 3 oder 4, wobei das Vergrößern, durch die Basisstation (10), der ersten Zeitdomänen-Ressourcenlänge Folgendes umfasst:

sequentielles Vergrößern, durch die Basisstation (10), einer oder mehrerer erster Zeitdomänen-Ressourcenlängen in aufsteigender Reihenfolge basierend auf einem ersten Zeitdomänen-Ressourcenlängen-Kandidatensatz, wobei der erste Zeitdomänen-Ressourcenlängen-Kandidatensatz mindestens eine erste Kandidaten-Zeitdomänen-Ressourcenlänge umfasst.

6. Basisstation (10) für ein drahtloses Kommunikationssystem, wobei das drahtlose Kommunikationssystem ein LTE-System, ein LTE-Advanced-System oder ein neues Funksystem ist, wobei die Basisstation ein Bestimmungsmodul (30) und ein Anpassungsmodul (31) umfasst, wobei

das Bestimmungsmodul (30) zum Bestimmen einer ersten Zeitdomänen-Ressourcenlänge, die eine Länge einer ersten Zeitdomänen-Ressource ist, und einer zweiten Zeitdomänen-Ressourcenlänge, die eine Länge einer zweiten Zeitdomänen-Ressource ist, konfiguriert ist, wobei die erste Zeitdomänen-Ressource durch ein Endgerät (11) verwendet wird, um von einem ersten Zustand in einen zweiten Zustand umzuschalten, wobei der erste Zustand ein Zustand ist, in dem das Endgerät (11) Planungsinformationen empfängt, der zweite Zustand ein Zustand ist, in dem das Endgerät (11) Downlink-Daten empfängt, und die zweite Zeitdomänen-Ressource durch das Endgerät (11) verwendet wird, um die Downlink-Daten zu empfangen; das Anpassungsmodul (31) zum Verringern der zweiten Zeitdomänen-Ressourcenlänge konfiguriert ist, wenn die erste Zeitdomänen-Ressourcenlänge, die durch das Bestimmungsmodul (30) bestimmt ist, größer oder gleich einem voreingestellten Schwellenwert ist; und das Bestimmungsmodul (30) ferner zu Folgendem konfiguriert ist:

wenn eine dritte Zeitdomänen-Ressourcenlänge einer dritten Zeitdomänen-Ressource größer oder gleich der verringerten zweiten Zeitdomänen-Ressourcenlänge ist, Bestimmen der ersten Zeitdomänen-Ressourcenlänge als eine erste Ziel-Zeitdomänen-Ressourcenlänge und Bestimmen der verringerten zweiten Zeitdomänen-Ressourcenlänge als eine zweite Ziel-Zeitdomänen-Ressourcenlänge, wobei die dritte Zeitdomänen-Ressource eine nächste Zeitdomänen-Ressource ist, die an die erste Zeitdomänen-Ressource angrenzt und die verwendet werden kann, um die Downlink-Daten zu übertragen, wobei die zweite Zeitdomänen-Ressource und die dritte Zeitdomänen-Ressource unterschiedliche Zeitdomänen-Ressourcen sind, wobei die erste Ziel-Zeitdomänen-Ressourcenlänge die Länge der ersten Zeitdomänen-Ressource ist, die durch die Basisstation (10) dem Endgerät (11) zugewiesen wird, und wobei die zweite Ziel-Zeitdomänen-Ressourcenlänge die Länge der verringerten zweiten Zeitdomänen-Ressource ist, die durch die Basisstation (10) dem Endgerät (11) zugewiesen wird; wobei das Bestimmungsmodul (30) zum Bestimmen der ersten Zeitdomänen-Ressourcenlänge durch Folgendes konfiguriert ist:

Bestimmen einer kleinsten Zeitdomänen-Ressourcenlänge in einem ersten Zeitdomänen-Ressourcenlängen-Kandidatensatz, wobei jedes der Elemente in dem ersten Zeitdomänen-Ressourcenlängen-Kandidatensatz eine Summe jedes Elements in einem voreingestellten Zeitdomänen-Ressourcenlängensatz und einer voreingestellten Länge ist; und wobei das Bestimmungsmodul (30) zum Bestimmen der zweiten Zeitdomänen-Ressourcenlänge durch Folgendes konfiguriert ist: Erhalten der zweiten Zeitdomänen-Ressourcenlänge mithilfe der folgenden Formel:

$$T3 = M \times N \times P,$$

wobei T3 die zweite Zeitdomänen-Ressourcenlänge ist, M eine Menge von Subframes ist, die durch das Endgerät (11) verwendet werden, um die Downlink-Daten zu empfangen, N die Dauer eines oder mehrerer Subframes ist, die in einem Protokoll spezifiziert sind, und P die Menge von Wiederholungen des einen oder der mehreren Subframes ist.

7.  Basisstation (10) nach Anspruch 6, wobei das Anpassungsmodul (31) insbesondere zum Verringern einer ersten Subframe-Menge konfiguriert ist, wobei eine verringerte erste Subframe-Menge Folgendes erfüllt: N2 ≤ N1 ≤ N3, wobei N1 die verringerte erste Subframe-Menge ist, N2 ein kleinster Wert einer Menge von Subframes ist, die von dem Endgerät (11) benötigt wird, um die Downlink-Daten zu empfangen, N3 ein größter Wert der Menge von Subframes ist, die von dem Endgerät (11) benötigt wird, um die Downlink-Daten zu empfangen, und die erste Subframe-Menge eine Menge von Subframes ist, die in der dritten Zeitdomänen-Ressource umfasst ist.

8.  Basisstation (10) nach Anspruch 6 oder 7, wobei

das Anpassungsmodul (31) ferner dazu konfiguriert ist, die erste Zeitdomänen-Ressourcenlänge zu vergrößern, wenn die dritte Zeitdomänen-Ressourcenlänge kleiner als die verringerte zweite Zeitdomänen-Ressourcenlänge ist; und

das Bestimmungsmodul (30) ferner zu Folgendem konfiguriert ist:

wenn eine vierte Zeitdomänen-Ressourcenlänge einer vierten Zeitdomänen-Ressource größer oder gleich der verringerten zweiten Zeitdomänen-Ressourcenlänge ist,
Bestimmen einer vergrößerten ersten Zeitdomänen-Ressourcenlänge als die erste Ziel-Zeitdomänen-Ressourcenlänge und Bestimmen der verringerten zweiten Zeitdomänen-Ressourcenlänge als die zweite Ziel-Zeitdomänen-Ressourcenlänge,
wobei die vierte Zeitdomänen-Ressource eine nächste Zeitdomänen-Ressource ist, die an eine vergrößerte erste Zeitdomänen-Ressource angrenzt und die verwendet wird, um die Downlink-Daten zu übertragen; oder
das Anpassungsmodul (31) ferner dazu konfiguriert ist, die verringerte zweite Zeitdomänen-Ressourcenlänge zu verringern, wenn die vierte Zeitdomänen-Ressourcenlänge kleiner als die verringerte zweite Zeitdomänen-Ressourcenlänge ist.

9. Basisstation (10) nach einem der Ansprüche 6 bis 8, wobei

das Bestimmungsmodul (30) ferner zum Bestimmen, ob die dritte Zeitdomänen-Ressourcenlänge größer oder gleich der zweiten Zeitdomänen-Ressourcenlänge ist, konfiguriert ist; und
das Bestimmungsmodul (30) ferner zu Folgendem konfiguriert ist:

wenn die dritte Zeitdomänen-Ressourcenlänge größer oder gleich der zweiten Zeitdomänen-Ressourcenlänge ist, Bestimmen der ersten Zeitdomänen-Ressourcenlänge als die erste Ziel-Zeitdomänen-Ressourcenlänge und Bestimmen der zweiten Zeitdomänen-Ressourcenlänge als die zweite Ziel-Zeitdomänen-Ressourcenlänge; oder
das Anpassungsmodul (31) ferner dazu konfiguriert ist, die erste Zeitdomänen-Ressourcenlänge zu vergrößern, wenn die dritte Zeitdomänen-Ressourcenlänge kleiner als die zweite Zeitdomänen-Ressourcenlänge ist.

10. Basisstation (10) nach Anspruch 8 oder 9, wobei das Anpassungsmodul (31) insbesondere zum sequentiellen Vergrößern einer oder mehrerer erster Zeitdomänen-Ressourcenlängen in aufsteigender Reihenfolge basierend auf einem ersten Zeitdomänen-Ressourcenlängen-Kandidatensatz konfiguriert ist, wobei der erste Zeitdomänen-Ressourcenlängen-Kandidatensatz mindestens eine erste Kandidaten-Zeitdomänen-Ressourcenlänge umfasst.

11. Basisstation (10) für ein drahtloses Kommunikationssystem, wobei das drahtlose Kommunikationssystem ein LTE-System, ein LTE-Advanced-System oder ein neues Funksystem ist, wobei die Basisstation (10) einen Prozessor (40) und einen Speicher (42), der mit dem Prozessor (40) gekoppelt ist, umfasst, wobei der Speicher (42) dazu konfiguriert ist, eine Computeranweisung zu speichern, und, wenn die Basisstation (10) läuft, der Prozessor (40) die in dem Speicher (42) gespeicherte Computeranweisung ausführt, sodass die Basisstation (10) das Verfahren zur Zuweisung von Downlink-Übertragungsressourcen nach einem der Ansprüche 1 bis 5 durchführt.

12. Computerlesbares Speichermedium, eine Computeranweisung umfassend, wobei, wenn die Computeranweisung auf einer Basisstation (10) ausgeführt wird, die Basisstation (10) das Verfahren zur Zuweisung von Downlink-Übertragungsressourcen nach einem der Ansprüche 1 bis 5 durchführt.

13. Computerprogrammprodukt, umfassend eine Computeranweisung, wobei, wenn das Computerprogrammprodukt auf einer Basisstation (10) läuft, die Basisstation (10) das Verfahren zur Zuweisung von Downlink-Übertragungsressourcen nach einem Ansprüche 1 bis 5 durchführt.

**Revendications**

1. Procédé d'allocation de ressource de transmission en liaison descendante pour un système de communication sans fil, dans lequel le système de communication sans fil est un système LTE, un système LTE avancé ou un nouveau système radio, le procédé comprenant :

la détermination (S101), par une station de base (10), d'une première longueur de ressource de domaine temporel, qui est une longueur d'une première ressource de domaine temporel, et d'une deuxième longueur de ressource de domaine temporel, qui est une longueur d'une deuxième ressource de domaine temporel, dans lequel la première ressource de domaine temporel est utilisée par un terminal (11) pour passer d'un premier état à un second état, le premier état est un état dans lequel le terminal (11) reçoit des informations de planification, le second état est un état dans lequel le terminal (11) reçoit des données de liaison descendante, et la deuxième ressource de domaine temporel est utilisée par le terminal (11) pour recevoir les données de liaison descendante ;

la réduction (S102), par la station de base (10), de la deuxième longueur de ressource de domaine temporel si la première longueur de ressource de domaine temporel est supérieure ou égale à un seuil prédéfini ; et

si une troisième longueur de ressource de domaine temporel d'une troisième ressource de domaine temporel est supérieure ou égale à la deuxième longueur de ressource de domaine temporel réduite, la détermination (S103), par la station de base (10), de la première longueur de ressource de domaine temporel en tant que première longueur de ressource de domaine temporel cible, et la détermination, par la station de base (10), de la deuxième longueur de ressource de domaine temporel réduite en tant que deuxième longueur de ressource de domaine temporel cible, dans lequel la troisième ressource de domaine temporel est une ressource de domaine temporel suivante qui est adjacente à la première ressource de domaine temporel et qui peut être utilisée pour transmettre les données de liaison descendante, dans lequel la deuxième ressource de domaine temporel et la troisième ressource de domaine temporel sont des ressources de domaine temporel différentes,

dans lequel la première longueur de ressource de domaine temporel cible est la longueur de la première ressource de domaine temporel allouée par la station de base (10) au terminal (11), et dans lequel la deuxième longueur de ressource de domaine temporel cible est la longueur de la deuxième ressource de domaine temporel réduite allouée par la station de base (10) au terminal (11) ;

dans lequel la détermination (S101), par la station de base (10), de la première longueur de ressource de domaine temporel comprend :

   la détermination, par la station de base (10), de la plus petite longueur de ressource de domaine temporel dans un premier ensemble candidat de longueurs de ressource de domaine temporel, dans lequel chacun des éléments dans le premier ensemble candidat de longueurs de ressource de domaine temporel est une somme de chaque élément dans un ensemble de longueurs de ressource de domaine temporel prédéfini et d'une longueur prédéfinie ; et
   dans lequel la détermination (S101), par la station de base (10), de la deuxième longueur de ressource de domaine temporel comprend :
l'obtention de la deuxième longueur de ressource de domaine temporel à l'aide de la formule suivante :

$$T3 = M \times N \times P,$$

où T3 est la deuxième longueur de ressource de domaine temporel, M est une quantité de sous-trames utilisées par le terminal (11) pour recevoir les données de liaison descendante, N est la durée d'une ou plusieurs sous-trames spécifiées dans un protocole, et P est la quantité de répétitions des une ou plusieurs sous-trames.

**2.** Procédé selon la revendication 1, dans lequel la réduction (S102), par la station de base (10), de la deuxième longueur de ressource de domaine temporel si la première longueur de ressource de domaine temporel est supérieure ou égale à un seuil prédéfini comprend :
la réduction, par la station de base (10), d'une première quantité de sous-trames, dans lequel une première quantité de sous-trames réduite satisfait : N2 ≤ N1 ≤ N3, N1 est la première quantité de sous-trames réduite, N2 est la plus petite valeur d'une quantité de sous-trames requises par le terminal (11) pour recevoir les données de liaison descendante, N3 est la plus grande valeur de la quantité de sous-trames requises par le terminal (11) pour recevoir les données de liaison descendante, et la première quantité de sous-trames est une quantité de sous-trames comprises dans la deuxième ressource de domaine temporel actuelle.

**3.** Procédé selon la revendication 1 ou 2, dans lequel si la troisième longueur de ressource de domaine temporel est inférieure à la deuxième longueur de ressource de domaine temporel réduite, le procédé comprend en outre :

   l'augmentation, par la station de base (10), de la première longueur de ressource de domaine temporel ; et
   si une quatrième longueur de ressource de domaine temporel d'une quatrième ressource de domaine temporel est supérieure ou égale à la deuxième longueur de ressource de domaine temporel réduite, la détermination, par la station de base (10), d'une première longueur de ressource de domaine temporel augmentée comme étant la première longueur de ressource de domaine temporel cible, et
   la détermination, par la station de base (10), de la deuxième longueur de ressource de domaine temporel réduite comme étant la deuxième longueur de ressource de domaine temporel cible, dans lequel la quatrième ressource de domaine temporel est une ressource de domaine temporel suivante qui est adjacente à une première ressource de domaine temporel augmentée et qui est utilisée pour transmettre les données de liaison descendante ; ou

la réduction, par la station de base (10), de la deuxième longueur de ressource de domaine temporel réduite si la quatrième longueur de ressource de domaine temporel est inférieure à la deuxième longueur de ressource de domaine temporel réduite.

4. Procédé selon l'une quelconque des revendications 1 à 3, dans lequel si la première longueur de ressource de domaine temporel est inférieure au seuil prédéfini, le procédé comprend en outre :

le fait de déterminer, par la station de base (10), si la troisième longueur de ressource de domaine temporel est supérieure ou égale à la deuxième longueur de ressource de domaine temporel ; et

si la troisième longueur de ressource de domaine temporel est supérieure ou égale à la deuxième longueur de ressource de domaine temporel,

la détermination, par la station de base (10), de la première longueur de ressource de domaine temporel comme étant la première longueur de ressource de domaine temporel cible, et la détermination, par la station de base (10), de la deuxième longueur de ressource de domaine temporel comme étant la deuxième longueur de ressource de domaine temporel cible ; ou

l'augmentation, par la station de base (10), de la première longueur de ressource de domaine temporel si la troisième longueur de ressource de domaine temporel est inférieure à la deuxième longueur de ressource de domaine temporel.

5. Procédé selon la revendication 3 ou 4, dans lequel l'augmentation, par la station de base (10), de la première longueur de ressource de domaine temporel comprend :

l'augmentation séquentielle, par la station de base (10), d'une ou plusieurs premières longueurs de ressource de domaine temporel dans un ordre croissant sur la base d'un premier ensemble candidat de longueurs de ressource de domaine temporel, dans lequel le premier ensemble candidat de longueurs de ressource de domaine temporel comprend au moins une première longueur de ressource de domaine temporel candidate.

6. Station de base (10) pour un système de communication sans fil, dans laquelle le système de communication sans fil est un système LTE, un système LTE avancé ou un nouveau système radio, la station de base comprenant un module de détermination (30) et un module d'ajustement (31), dans laquelle

le module de détermination (30) est configuré pour déterminer une première longueur de ressource de domaine temporel, qui est une longueur d'une première ressource de domaine temporel, et une deuxième longueur de ressource de domaine temporel, qui est une longueur d'une deuxième ressource de domaine temporel, dans laquelle la première ressource de domaine temporel est utilisée par un terminal (11) pour passer d'un premier état à un second état, le premier état est un état dans lequel le terminal (11) reçoit des informations de planification, le second état est un état dans lequel le terminal (11) reçoit des données de liaison descendante, et la deuxième ressource de domaine temporel est utilisée par le terminal (11) pour recevoir les données de liaison descendante ;
le module d'ajustement (31) est configuré pour réduire la deuxième longueur de ressource de domaine temporel si la première longueur de ressource de domaine temporel déterminée par le module de détermination (30) est supérieure ou égale à un seuil prédéfini ; et
le module de détermination (30) est en outre configuré pour :

si une troisième longueur de ressource de domaine temporel d'une troisième ressource de domaine temporel est supérieure ou égale à la deuxième longueur de ressource de domaine temporel réduite, déterminer la première longueur de ressource de domaine temporel en tant que première longueur de ressource de domaine temporel cible, et déterminer la deuxième longueur de ressource de domaine temporel réduite en tant que deuxième longueur de ressource de domaine temporel cible, dans laquelle la troisième ressource de domaine temporel est une ressource de domaine temporel suivante qui est adjacente à la première ressource de domaine temporel et qui peut être utilisée pour transmettre les données de liaison descendante, dans laquelle la deuxième ressource de domaine temporel et la troisième ressource de domaine temporel sont des ressources de domaine temporel différentes,
dans laquelle la première longueur de ressource de domaine temporel cible est la longueur de la première ressource de domaine temporel allouée par la station de base (10) au terminal (11), et dans laquelle la deuxième longueur de ressource de domaine temporel cible est la longueur de la deuxième ressource de domaine temporel réduite allouée par la station de base (10) au terminal (11) ;

dans laquelle le module de détermination (30) est configuré pour déterminer la première longueur de ressource de domaine temporel par :

la détermination de la plus petite longueur de ressource de domaine temporel dans un premier ensemble candidat de longueurs de ressources de domaine temporel, dans laquelle chacun des éléments dans le premier ensemble candidat de longueurs de ressources de domaine temporel est une somme de chaque élément dans un ensemble de longueurs de ressources de domaine temporel prédéfini et d'une longueur prédéfinie ; et

dans laquelle le module de détermination (30) est configuré pour déterminer la deuxième longueur de ressource de domaine temporel par :

l'obtention de la deuxième longueur de ressource de domaine temporel à l'aide de la formule suivante :

$$T3 = M \times N \times P,$$

où T3 est la deuxième longueur de ressource de domaine temporel, M est une quantité de sous-trames utilisées par le terminal (11) pour recevoir les données de liaison descendante, N est la durée d'une ou plusieurs sous-trames spécifiées dans un protocole, et P est la quantité de répétitions des une ou plusieurs sous-trames.

7. Station de base (10) selon la revendication 6, dans laquelle

le module d'ajustement (31) est spécifiquement configuré pour réduire une première quantité de sous-trames, dans laquelle une première quantité de sous-trames réduite satisfait : N2 ≤ N1 ≤ N3, N1 est la première quantité de sous-trames réduite, N2 est la plus petite valeur d'une quantité de sous-trames requises par le terminal (11) de recevoir les données de liaison descendante, N3 est la plus grande valeur de la quantité de sous-trames requises par le terminal (11) pour recevoir les données de liaison descendante, et la première quantité de sous-trames est une quantité de sous-trames comprises dans la troisième ressource de domaine temporel.

8. Station de base (10) selon la revendication 6 ou 7, dans laquelle

le module d'ajustement (31) est en outre configuré pour augmenter la première longueur de ressource de domaine temporel si la troisième longueur de ressource de domaine temporel est inférieure à la deuxième longueur de ressource de domaine temporel réduite ; et

le module de détermination (30) est en outre configuré pour :

si une quatrième longueur de ressource de domaine temporel d'une quatrième ressource de domaine temporel est supérieure ou égale à la deuxième longueur de ressource de domaine temporel réduite, déterminer une première longueur de ressource de domaine temporel augmentée comme étant la première longueur de ressource de domaine temporel cible, et

déterminer la deuxième longueur de ressource de domaine temporel réduite comme étant la deuxième longueur de ressource de domaine temporel cible,

dans laquelle la quatrième ressource de domaine temporel est une ressource de domaine temporel suivante qui est adjacente à une première ressource de domaine temporel augmentée et qui est utilisée pour transmettre les données de liaison descendante ; ou

le module d'ajustement (31) est en outre configuré pour réduire la deuxième longueur de ressource de domaine temporel réduite si la quatrième longueur de ressource de domaine temporel est inférieure à la deuxième longueur de ressource de domaine temporel réduite.

9. Station de base (10) selon l'une quelconque des revendications 6 à 8, dans laquelle :

le module de détermination (30) est en outre configuré pour déterminer si la troisième longueur de ressource de domaine temporel est supérieure ou égale à la deuxième longueur de ressource de domaine temporel ; et

le module de détermination (30) est en outre configuré pour :

si la troisième longueur de ressource de domaine temporel est supérieure ou égale à la deuxième longueur de ressource de domaine temporel, déterminer la première longueur de ressource de domaine temporel comme étant la première longueur de ressource de domaine temporel cible, et déterminer la deuxième longueur de ressource de domaine temporel comme étant la deuxième longueur de ressource de domaine temporel cible ; ou

le module d'ajustement (31) est en outre configuré pour augmenter la première longueur de ressource de domaine temporel si la troisième longueur de ressource de domaine temporel est inférieure à la deuxième longueur de ressource de domaine temporel.

10. Station de base (10) selon la revendication 8 ou 9, dans laquelle
le module d'ajustement (31) est spécifiquement configuré pour augmenter séquentiellement une ou plusieurs premières longueurs de ressources de domaine temporel dans un ordre croissant sur la base d'un premier ensemble candidat de longueurs de ressource de domaine temporel, dans laquelle le premier ensemble candidat de longueurs de ressource de domaine temporel comprend au moins une première longueur de ressource de domaine candidate.

11. Station de base (10) pour un système de communication sans fil, dans laquelle le système de communication sans fil est un système LTE, un système avancé LTE ou un nouveau système radio, la station de base (10) comprenant un processeur (40) et une mémoire (42) couplée au processeur (40), dans laquelle la mémoire (42) est configurée pour stocker une instruction informatique, et lorsque la station de base (10) fonctionne, le processeur (40) exécute l'instruction informatique stockée dans la mémoire (42), de sorte que la station de base (10) effectue le procédé d'allocation de ressource de transmission en liaison descendante selon l'une quelconque des revendications 1 à 5.

12. Support de stockage lisible par ordinateur, comprenant une instruction informatique, dans lequel lorsque l'instruction informatique fonctionne sur la station de base (10), la station de base (10) effectue le procédé d'allocation de ressource de transmission en liaison descendante selon l'une quelconque des revendications 1 à 5.

13. Produit de programme informatique comprenant une instruction informatique, dans lequel lorsque le produit de programme informatique fonctionne sur une station de base (10), la station de base (10) effectue le procédé d'allocation de ressource de transmission en liaison descendante selon l'une quelconque des revendications 1 à 5.

Terminal 11b

Terminal 11a

Terminal 11c

Base station 10

FIG. 1

Antenna

20

Radio frequency unit

Memory | Processor

21

FIG. 2

| Time domain resource 1 | Time domain resource 2 | Time domain resource 3 | Time domain resource 4 |
|---|---|---|---|
| T1 | T2 | T3 | T4 |

**FIG. 3**

A base station determines a first time domain resource length and a second time domain resource length — S101

The base station decreases the second time domain resource length if the first time domain resource length is greater than or equal to a preset threshold — S102

If a third time domain resource length is greater than or equal to a decreased second time domain resource length, the base station determines the first time domain resource length as a first target time domain resource length, and determines the decreased second time domain resource length as a second target time domain resource length — S103

**FIG. 4**

A base station determines a first time domain resource length and a second time domain resource length

S101

The base station decreases a first subframe quantity, where the first subframe quantity is a quantity of subframes included in a second time domain resource

S102a

If a third time domain resource length is greater than or equal to a decreased second time domain resource length, the base station determines the first time domain resource length as a first target time domain resource length, and determines the decreased second time domain resource length as a second target time domain resource length

S103

FIG. 5

S201: A base station determines a third target time domain resource length

S202: The base station determines a first time domain resource length and a second time domain resource length

S203: The base station determines whether the first time domain resource length is greater than or equal to a preset threshold

Yes

S204: The base station decreases the second time domain resource length

S205: The base station determines whether a third time domain resource length is greater than or equal to a decreased second time domain resource length

No

TO
FIG. 6B

Yes

S206: The base station determines the first time domain resource length as a first target time domain resource length, and determines the decreased second time domain resource length as a second target time domain resource length

S210: The base station determines a fourth target time domain resource

FIG. 6A

CONT.
FROM
FIG. 6A

S207: The base station increases the
first time domain resource length

S208: The base
station determines
whether a fourth time domain
resource length is greater than or
equal to the decreased second
time domain resource
length

Yes

S209: The base station determines an
increased first time domain resource
length as the first target time domain
resource length, and determines the
decreased second time domain
resource length as the second target
time domain resource length

S210: The base station determines a
fourth target time domain resource

FIG. 6B

S301: A base station determines a third target time domain resource length

S302: The base station determines a first time domain resource length and a second time domain resource length

S303: The base station determines whether the first time domain resource length is greater than or equal to a preset threshold

No

Yes

S304: The base station decreases the current second time domain resource length

S305: The base station determines whether a current third time domain resource length is greater than or equal to a current second time domain resource length

No

TO FIG. 7B

Yes

S306: The base station determines the current first time domain resource length as a first target time domain resource length, and determines the current second time domain resource length as a second target time domain resource length

S310: The base station determines a fourth target time domain resource

FIG. 7A

CONT.
FROM
FIG. 7A

S307: The base station increases the
current first time domain resource length

S308: The base
station determines whether the
current third time domain resource length
is greater than or equal to the
current second time domain
resource length

No

Yes

S309: The base station determines a
current first time domain resource length
as a first target time domain resource
length, and determines the current second
time domain resource length as a second
target time domain resource length

S310: The base station determines a fourth
target time domain resource

FIG. 7B

```
┌─────────────────────────────────────┐
│              Base station            │
│   ┌─────────────────────────────┐    │
│   │   Determining module 30     │    │
│   └─────────────────────────────┘    │
│   ┌─────────────────────────────┐    │
│   │   Adjustment module 31      │    │
│   └─────────────────────────────┘    │
└─────────────────────────────────────┘
```

FIG. 8

```
┌─────────────────────────────────────┐
│              Base station            │
│   ┌─────────────────────────────┐    │
│   │  Communications module 41   │    │
│   └─────────────────────────────┘    │
│   ┌─────────────────────────────┐    │
│   │   Processing module 40      │    │
│   └─────────────────────────────┘    │
│   ┌─────────────────────────────┐    │
│   │    Storage module 42        │    │
│   └─────────────────────────────┘    │
└─────────────────────────────────────┘
```

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013194931 A

- US 2017180096 A1

**Non-patent literature cited in the description**

- **ERICSSON.** RAN1 decisions for WI Shortened TTI and processing time for LTE (LTE_sTTIandPT) - per topic. *3GPP DRAFT; R1-1721313, RANI DECISIONS FOR LTE_STTIANDPT - PER TOPIC (REVISION OF R1-1719247), 3RD GENERATION PARTNERSHIP PROJECT (3GPP), MOBILE COMPETENCE CENTRE ; 650, ROUTE DES LUCIOLES ; F-06921 S,* 04 December 2017, vol. RAN WG1, http://www.3gpp.org/ftp/tsg%5Fran/WG1%5FRL1/TSGR1%5F91/Docs